# EUROPEAN PATENT APPLICATION

(11) **EP 0 853 979 A1**
(43) Date of publication of application: **22.07.1998**
(21) Application number: 96906947.5
(22) Date of filing: 26.03.1996
(51) Int. Cl.: B04B 1/04, B04B 11/00

(54) **BATCH CENTRIFUGAL SEPARATOR OF HIGH PERFORMANCE ACHIEVED BY TECHNICALLY IMPROVING ITS FUNCTIONS**

(30) Priority: 06.04.1995 JP 118877/95
(71) Applicant: Watanabe, Shinichi, Nagano 386-11 (JP)
(72) Inventor: Watanabe, Shinichi, Nagano 386-11 (JP)
(74) Representative: Hillier, Peter
(86) International application number: JP9600779
(87) International publication number: WO9631283

(57) **Abstract**

The invention is intended, on the basis of the analysis of the experimental data with regard to a batch type centrifugal separator in prior art, to improve various functions by means of newly included mechanisms, so as to provide an organically combined high performance batch type centrifugal separator having the greatest level of perfection.

The newly included mechanism improved in terms of technical functions over prior art are integrated as follows.
(1) Improvements in the mechanism of material supply:
   A flow of object liquid is improved by providing an auxiliary supply pipe (11) disposed within a hollow bore of a hollow rotating shaft (3), and by providing a deflector plate (13).
(2) Improvements in mechanisms in a separation tank (4):
   Functional effects of separation, sedimentation and peeling are improved by providing in the separation tank (4) a compulsive sedimentation device (5) and a fine particle peeling device (6).
(3) Improvements in the mechanism of discharging purified liquid and deposited fine particles:
   Discharge functions are improved by providing an anti-atomization device (16) in a purified liquid recovery passage (14, and by providing fine particle discharge port (5) at the lower end of the separation tank (4).

Thus, a high performance batch type centrifugal separator has been realized.

## Description

### TECHNICAL FIELD

This invention is intended to obtain a centrifugal separator having high performance by technically improving various functions of the separator. The invention is specifically relates to the following Japanese Patent Applications.: (1) Japanese Patent Application No. HEI-3-187086 (Attorney's Docket No. T-0001) entitled "Integrated and Concentrated Discharge Method in Batch Type Centrifugal Separator"; and

(2) Japanese Patent Application No. HEI-6-294044 (Attorney's Docket No. T-0002) entitled "Integrated and Concentrated Automatic Discharge Method in Batch Type Centrifugal Separator having Closable Actuation Valve using Centrifugal Effect".

### TECHNICAL BACKGROUND

The overall function of a prototype separator based on the above-mentioned Application (1) or (2) has not been reached at a satisfactory level. Thus, it is necessary to drastically improve various mechanical functions of the prior art separator in terms of technical means, so as to provide a centrifugal separator having overall high-degree performance.

According to the analysis for the experimental data obtained with regard to various prototype centrifugal separators having been developed heretofore, it is found that the following three functions are systematically combined to dominate the overall performance of the separators:
(1) Function of the step of supplying object liquid;
(2) Function of the step of separation; and
(3) Function of the step of discharging separated material out of a separator.

The above-mentioned three functional steps have not yet achieved a sufficient technical level.

Although the performance of separation function in a batch type centrifugal separator according to prior art represents a practically sufficient level, it is insufficient and immature with regard to the above-mentioned three functions.

It is an object to provide a batch type centrifugal separator having an overall performance of the greatest level by technically improving the above-mentioned three process steps.

### SUMMARY OF THE INVENTION

The invention is intended to provide a batch type centrifugal separator having a high-degree perfection capable of exerting the greatest overall performance by improving the function of each of the above-mentioned three process steps.

By analyzing the experimental data obtained with regard to the prototype separators based on the above-mentioned Japanese Patent Applications, it was found that the following three problems should be solved:
(1) Problem with regard to the function of the step of supplying object liquid,
   Since a flow of object liquid is supplied directly into a hollow bore of a hollow rotating shaft running at a high speed, a centrifugal separation effect is caused within the hollow bore of the hollow rotating shaft, so that a blockage phenomenon is induced to cause disability of supply;
(2) Problem with regard to the function of the step of separation;
   It is desirable to improve the separation function by including a compulsive sedimentation device, in addition to the separation function caused by centrifugal force within the separation tank running at a high speed;
(3) Problem with regard to the function of the step of discharging separated material out of the separator;
   The object liquid within the separation tank is separated into a flow of purified liquid and fine particles. The flow of purified liquid is discharged from the upper portion of the separation tank, while the fine particles are discharged from the lower portion of the separation tank. In this regard, it is mentioned that the purified liquid may include a particular liquid (for example, hydraulic oil, cutting oil or the like) which may be atomized upon discharge from the separation tank. Thus, it is desirable to provide an anti-atomization. It is most efficient for the deposited fine particles to be discharged directly through the bottom of the separation tank out of the separator. These are the objectives in technically improving the functions of the separator. It is desirable to provide a high performance centrifugal separator having a high-degree of completion by totally improving functions including the above-mentioned various functions.

### BRIEF DESCRIPTION OF THE DRAWING

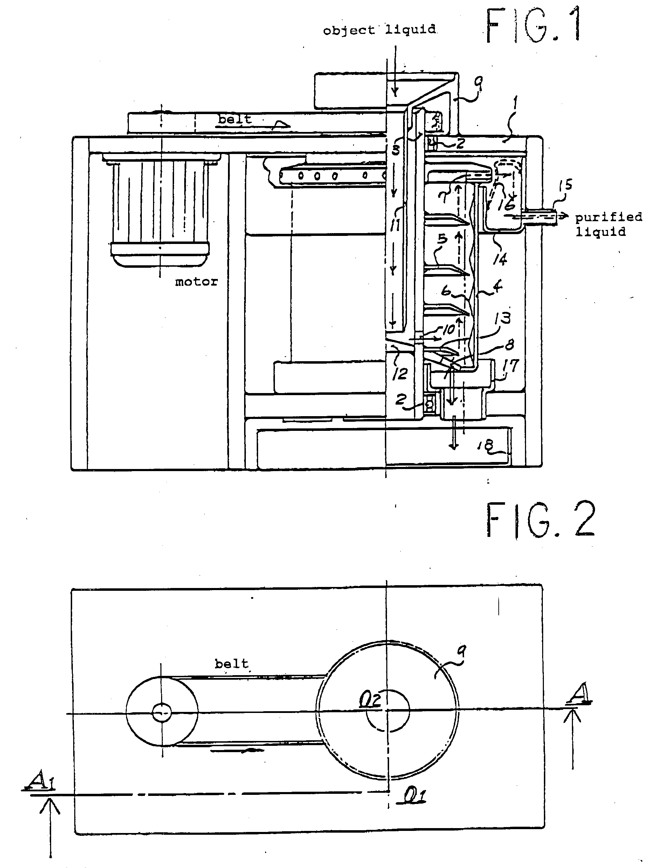

Fig. 1 is a view taken along line A1-O1-O2-A2 of Fig. 2; and
Fig. 2 is a plan view of a separator according to the invention.

In the drawing, reference numeral 1 designates a body of the device, 2 a bearing, 3 a hollow rotating shaft, 4 a separation tank, 5 a forced sedimentation device, 6 a peeling device for deposited fine particles, 7 an outlet for discharging purified liquid, 8 a discharge port for deposited fine particles, 9 a supply port, 10 an inlet to the separation tank, 11 an auxiliary supply pipe, 12 a partition wall, 13 a deflector plate, 14 a recovery passage for purified liquid, 15 a recovery port for purified liquid, 16 an anti-atomization device, 17 a sludge inlet port, and 18 a sludge receiver.

### BEST MODE FOR CARRYING OUT THE INVENTION

The invention will be explained below with reference to the drawings. A hollow rotating shaft 3 carried by bearings 2 located at lower and upper positions of a body 1 is rotated at higher speeds by means of a motor through belt drive. The hollow rotating shaft 3 securely holds a separation tank 4 and a compulsive sedimentation device 5. The separation tank 4 houses therein a peeling device 6 for stripping fine particles from the inner wall of the separation tank. The fine particle peeling device 6 consists of an undulate strip made of a flexible sheet extending over the entire inner wall of the separation tank. The separation tank 4 includes a plurality of outlet ports 7 for purified liquid in the side surface of the upper end thereof, and a discharge port 8 for deposited fine particles at the lower end thereof. When a flow of object liquid is supplied into the separator under running from a supply port 9 (as shown by the solid line with an arrow mark), the flow of object liquid is directed through an auxiliary supply pipe 11, fixed to the supply port 9 and extending to an inlet port 10 to the tank, and encountered with a partition wall 12 in the hollow bore of the hollow rotating shaft 3. The flow of object liquid is further flown through the inlet port 10 into the tank and directed by means of a deflector plate 13 toward the inner wall of the separation tank 4.

The flow of object liquid is subjected to a centrifugal effect within the separation tank 4. Thus, fine particles in the flow of object liquid are separated from the object liquid and retained on the inner wall of the separation tank 4. The purified liquid is directed upwardly (as shown by the dotted line with an arrow mark in the drawing). The thus purified object liquid is discharged through the outlet ports 7 for the purified liquid into a recovery passage 14 for the purified liquid. The purified liquid is finally flown out of the separator through a recovery port 15 for the purified liquid. The recovery passage 14 for the purified liquid is equipped with a device 16 for preventing atomization of the purified liquid, the device being formed from a screen having fine opening. The fine particles remaining on the inner wall of the separation tank 4 are peeled from the inner wall by means of the peeling device 6, when the separator is stopped. The fine particles are directed, as concentrated sludge, through the discharge port 8 in the bottom surface of the separation tank 4 (as shown by a double solid line in the drawing), and through a sludge passage 17 and collected in a sludge receiver 18.

A series of functional step will be explained in detail below with reference to the high performance batch centrifugal separator. A flow of object liquid is supplied to the separator of the invention, when the separator is started and reaches a predetermined rotational speed. In this regard, it is to be noted that, according to a prior art, a flow of object liquid is supplied directly into a hollow bore of the rotating shaft 3 running at a high speed, so that fine particles are deposited, by means of centrifugal effect, in the hollow bore. This tended to cause a blockage phenomenon in the hollow bore. On the contrary, and in accordance with the invention, the supply port 9 is newly provided and fixed to the body 1, while, at the same time, the auxiliary supply pipe 11 is provided within the hollow bore, in order to avoid the above-mentioned blockage phenomenon. Accordingly, the flow of object liquid is directed from the supply port 9 through the auxiliary supply pipe 11. Then, the flow of object liquid is encountered with the partition wall 12 within the hollow bore and directed into the separation tank 4 through the inlet port 10 in the side surface of the separation tank. Thereafter, the flow of object liquid is directed toward the inner wall of the separation tank 4 by means of the newly provided deflector plate 13.

The object liquid is directed upwardly within the separation tank 4 and exposed to a solid-liquid separation effect. The purified liquid is discharged from the discharge ports 7 in the side surface of the upper end of the separation tank and recovered in the purified liquid recovery passage 14. The purified liquid is finally discharged from the separator through the purified liquid recovery port 15. It is noted that the level of the object liquid within the separation tank 4 is always maintained at the liquid level (shown by the two-dot chain line in the drawing) of the purified liquid discharge ports 7, while the fine particle discharge port 8 is located at a level above the above-mentioned liquid level. Accordingly, it is unnecessary for the fine particle discharge port 8 to be plugged. It is also noted that the tip of each of the compulsive sedimentation devices mounted on the hollow rotating shaft 3 is positioned in the object liquid at a level slightly below the above-mentioned liquid level, so that sedimentation effect thereof is increased. Since the tip of each of the compulsive sedimentation devices 5 and the deflector plate 13 is bent in a downward direction, the deposited fine particles may be flown downwardly and discharged without any interruption.

The peeling device 6 for deposited fine particles mounted on the entire inner wall of the separation tank 4 consists of a plurality of flexible sheets (for example, stainless steel sheets) which form an undulate strip as shown in the drawing under normal stationary condition. It is noted, however, that the flexible sheets become closely contacted with the entire inner wall of the separation tank due to a centrifugal force when the separator is under a high-speed running condition, so as to cause fine particles to be deposited on the inner wall of the separation tank. When the separator is stopped, the flexible sheets are returned to the original undulate configuration to cause the deposited fine particles to be peeled off from the inner wall of the separation tank. The thus removed fine particles are brought into the bottom of the separation tank and directed through the fine particle discharge port 8 and through a sludge passage 17, so as to be collected in a sludge receiver 18.

It is noted that the purified liquid, having been discharged from the discharge ports 7 in the side surface of the upper end of the separation tank 4, may include a quantity of liquid having a relatively high viscosity, such as cutting oil, hydraulic oil or the like, which may be easily atomized. Accordingly, the anti-atomization device 16 consisting of a screen of fine openings located in the purified liquid recovery passage 14 is disposed in close relationship with the discharge ports 7, so as to provide an anti-atomization means.

Conventionally, the fine particle discharge port 8 provided at the lower end of the separation tank 4 is positioned just below the partition wall 12 in the hollow bore of the hollow rotating shaft 3, so as to direct fine particles into the hollow bore. According to the experimental data, it was found that such discharge port is insufficient in terms of discharging ability. Thus, and in accordance with the invention, the discharge port 8 is formed at the bottom of the separation tank 4, so as to directly discharge fine particles therefrom. This is quite important improvement in the construction of the separator, since such constructional improvement obviates open-close operation of the discharge port, while enhancing discharge ability.

As is apparent from the foregoing, the invention provides a high performance batch centrifugal separator improved in its technical and constructional features.

### INDUSTRIAL APPLICABILITY

The invention provides a high performance batch centrifugal separator having a high percentage of completion in terms of having various new functions and increased efficiency by technically and totally improving a series of process steps of prior art batch type centrifugal separators. It is specifically noted that provision of the fine particle discharge port 8 at the lower end of the separation tank 4 as a direct discharge outlet allows for simplification, reduction in cost, and unmanned or maintenance free operation of the separator.

## Claims

1. A centrifugal separator comprising a hollow rotating shaft (3), a supply port (9) for a flow of object liquid, and on auxiliary supply pipe (11) integrally fixed to the supply port (9), the auxiliary supply pipe being disposed within the hollow rotating shaft.

2. A separation tank (4) hold by a hollow rotating shaft (3), the separation tank housing therein a deflector plate (13), a compulsive sedimentation device (5), and a fine particle peeling device (6), the separation tank having a lower end, the lower end being formed with a fine particle discharge port (8), the fine particle discharge port being located at a level above a level of purified liquid.

3. A purified liquid recovery passage (14) comprising an anti-atomization device (16) disposed close to a purified liquid discharge port (7).

4. A high performance batch type centrifugal separator comprising the improved function(s) recited in any one of the preceding Claims.
